# EUROPÄISCHE PATENTSCHRIFT

(11) **EP 1 238 729 B1**
(45) Veröffentlichungstag und Bekanntmachung des Hinweises auf die Patenterteilung: **15.09.2004**
(21) Anmeldenummer: 01104453.4
(22) Anmeldetag: 28.02.2001
(51) Int. Cl.: B23B 7/00

(54) **Drehmaschine**
Lathe
Tour

(43) Veröffentlichungstag der Anmeldung: 11.09.2002
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: HOEGER, STELLRECHT & PARTNER Patentanwälte

(56) Entgegenhaltungen:
- US-A- 3 922 936
- US-A- 4 008 647

## Beschreibung

Die Erfindung betrifft eine Drehmaschine, umfassend ein Maschinengestell, ein an dem Maschinengestell gehaltenes Spindelgehäuse, in welchem eine eine Werkstückaufnahme tragende Arbeitsspindel um eine Spindelachse drehbar gelagert ist, wobei die Arbeitsspindel eine von einem Spindelantrieb angetriebene Spindelwelle umfaßt, und eine Maschinensteuerung zum Ansteuern des Spindelantriebs.

Derartige Drehmaschinen sind aus dem Stand der Technik bekannt. Siehe zum Beispiel US-A-3 922 936. Bei diesen besteht das Problem, daß die Spindelantriebe dann, wenn sie für hohe Drehzahlen ausgelegt sind, bei niedrigen Drehzahlen nur noch eine sehr geringe Leistung mehr erbringen, da das Drehmoment in einem unteren Drehzahlbereich im wesentlichen konstant ist.

Damit steht für eine Werkstückbearbeitung, insbesondere bei großen Werkstücken, im unteren Drehzahlbereich zumindest dann, wenn nicht nur ein Werkzeug im Eingriff sein soll, sondern mehrere Werkzeuge im Eingriff sein sollen, nur noch eine geringe Zerspanungsleistung zur Verfügung, so daß die Werkstückbearbeitung entweder nicht oder nur unter erschwerten Bedingungen durchführbar ist.

Der Erfindung liegt daher die Aufgabe zugrunde, eine Drehmaschine der gattungsgemäßen Art derart zu verbessern, daß auch im unteren Drehzahlbereich eine ausreichend große Leistung für die Bearbeitung des Werkstücks zur Verfügung steht.

Diese Aufgabe wird bei einer Drehmaschine der eingangs beschriebenen Art erfindungsgemäß dadurch gelöst, daß die Spindelwelle mittels einer schaltbaren Kupplung mit einem Zusatzantrieb kuppelbar ist, daß der Zusatzantrieb zum Antrieb der Arbeitsspindel für eine Drehbearbeitung in einem unteren Drehzahlbereich und der Spindelantrieb zum Antrieb der Arbeitsspindel für eine Drehbearbeitung in einem oberen Drehzahlbereich ausgebildet sind und daß die Maschinensteuerung so ausgebildet ist, daß sie erkennt, ob die Drehmaschine im oberen Drehzahlbereich oder im unteren Drehzahlbereich arbeiten soll und durch geeignetes Schalten der Kupplung sowie geeignetes Ansteuern des Spindelantriebs und des Zusatzantriebs die Arbeitsspindel im oberen Drehzahlbereich nur mittels des Spindelantriebs und im unteren Drehzahlbereich mindestens mittels des Zusatzantriebs betreibt.

Der Vorteil der erfindungsgemäßen Lösung ist somit darin zu sehen, daß mit dieser die Möglichkeit besteht, einerseits einen Spindelantrieb vorzusehen, welcher für hohe Drehzahlen geeignet ist und die erforderlichen vorteilhaften Eigenschaften für hohe Drehzahlen aufweist und andererseits die Möglichkeit besteht, durch den Zusatzantrieb den unteren Drehzahlbereich abzudecken und somit auch im unteren Drehzahlbereich ein ausreichend großes Drehmoment zur Verfügung zu stellen, um auch in diesem das Werkstück optimal, insbesondere mit großer Zerspanungsleistung bearbeiten zu können.

Hinsichtlich der Ausbildung der schaltbaren Kupplung sind die unterschiedlichsten Möglichkeiten denkbar.

Eine besonders vorteilhafte Lösung sieht vor, daß die schaltbare Kupplung ein erstes Kupplungselement aufweist, welches auf der Spindelwelle sitzt, ein zweites Kupplungselement aufweist, welches durch den Zusatzantrieb antreibbar ist, und eine Führungsvorrichtung umfaßt, mittels welcher die Kupplungselemente zwischen einer Kupplungsstellung, in welcher die Kupplungselemente miteinander in Wirkverbindung stehen, und einer Freilaufstellung, in welcher die Kupplungselemente relativ zueinander frei drehbar sind, bewegbar sind.

Der Vorteil einer derartigen schaltbaren Kupplung ist der, daß sich in der Freilaufstellung das auf mit der Spindelwelle gekoppelte Kupplungselement frei drehen kann und somit im oberen Drehzahlbereich keine peripheren Getriebeelemente angetrieben werden müssen, welche die Dynamik der Arbeitsspindel im oberen Drehzahlbereich negativ beeinflussen würden.

Eine besonders vorteilhafte Ausbildung der schaltbaren Kupplung sieht vor, daß mit der Führungsvorrichtung das zweite Kupplungselement längs einer definierten Bahn zwischen der Kupplungsstellung und der Freilaufstellung bewegbar ist, so daß durch die definierte Bahn auch ein definiertes Ineingriffbringen der beiden Kupplungselemente möglich ist.

Die definierte Bahn kann dabei in unterschiedlichsten Richtungen verlaufen.

Beispielsweise wäre es denkbar, daß die definierte Bahn ungefähr parallel zur Spindelachse verläuft. In diesem Fall wäre es beispielsweise möglich, die Kupplungselemente durch eine axiale Bewegung in Eingriff zu bringen. Die Kupplungselemente könnten hierbei beispielsweise im Eingriffsbereich kegelstumpfähnlich geformt sein oder die Kupplungselemente könnten als Getriebeelemente eines Winkelgetriebes ausgebildet sein.

Eine besonders bevorzugte Lösung sieht vor, daß die Bahn ungefähr in radialer Richtung zu einer Spindelachse der Arbeitsspindel verläuft, wobei die Kupplungselemente vorzugsweise mit derart geformten Umfangsseiten versehen sind, daß diese durch die Führungsvorrichtung miteinander in Wirkverbindung bringbar sind.

Die Führungsvorrichtung könnte dabei so ausgebildet sein, daß sie eines der Kupplungselemente längs einer geraden Bahn führt.

Eine technisch besonders günstige Lösung sieht jedoch vor, daß die Führungsvorrichtung eine um eine Schwenkachse schwenkbare Schwenkvorrichtung ist, so daß das zweite Kupplungselement längs einer Kreisbahn bewegbar ist.

Hinsichtlich der Anordnung des zweiten Kupplungselements wurden im Zusammenhang mit der bisherigen Erläuterung der einzelnen Ausführungsbeispiele keine näheren Angaben gemacht.

Beispielsweise wäre es denkbar, zwischen dem zweiten Küpplungselement und einer Abtriebswelle des Zusatzantriebs ein ein Bewegen des Kupplungselements relativ zum Zusatzantrieb erlaubendes Getriebe vorzusehen.

Besonders günstig ist es jedoch, wenn das zweite Kupplungselement auf einer Abtriebswelle des Zusatzantriebs sitzt und wenn beim Schalten der Kupplung der gesamte Zusatzantrieb mittels der Führungsvorrichtung bewegbar ist. Dies erübrigt es, eine relative Bewegbarkeit des Kupplungselements bezüglich des Zusatzantriebs vorzusehen, und erlaubt es, das zweite Kupplungselement möglichst direkt und mit möglichst wenig Spiel anzutreiben.

Hinsichtlich der Ausbildung des Zusatzantriebs wurden bislang keine näheren Angaben gemacht. So wäre es beispielsweise denkbar, den Zusatzantrieb lediglich als Antriebsmotor auszubilden, welcher allerdings für niedrige Drehzahlen und hohe Drehmomente geeignet ist.

Besonders günstig ist es jedoch, wenn der Zusatzantrieb einen Antriebsmotor und ein Getriebe umfaßt, so daß der Antriebsmotor mit höheren Drehzahlen arbeiten kann und durch das Getriebe die niedrigen Drehzahlen und hohen Drehmomente erreicht werden.

Hinsichtlich der Kupplungselemente selbst wurden bislang keine näheren Angaben gemacht. So ist es besonders günstig, wenn die Kupplungselemente als formschlüssig in Wirkverbindung bringbare Getriebeelemente ausgebildet sind, da sich damit in beliebig einfacher Weise große Drehmomente übertragen lassen.

Im einfachsten Fall sind derartige formschlüssig in Wirkverbindung bringbare Getriebeelemente Zahnräder.

Ferner wurden hinsichtlich der Art der Betätigung der Führungsvorrichtung keine näheren Angaben gemacht. So ist es besonders vorteilhaft, wenn die Führungsvorrichtung durch eine von der Maschinensteuerung ansteuerbare Betätigungsvorrichtung antreibar ist.

Beispielsweise wäre es denkbar, hierzu einen Stellmotor vorzusehen, der beispielsweise ein Spindel-Mutter-Getriebe antreibt, um die Führungsvorrichtung zu verstellen.

Als besonders günstig hat es sich jedoch erwiesen, wenn die Betätigungsvorrichtung als die Kupplungselemente in der Kupplungsstellung mit einer Kraft beaufschlagend ausgebildet ist, so daß sich durch die Betätigungsvorrichtung auch noch erreichen läßt, daß die Kupplungselemente in ihrer Wirkverbindung in Eingriff gedrückt werden und somit als spielfreie Getriebestufe betreibbar sind.

Eine besonders günstige Ausbildung der Betätigungsvorrichtung sieht dabei vor, daß diese als Pneumatik- oder Hydraulikzylinder ausgebildet ist, mit welchem sich in einfacher Weise eine definierte Kraft auf die Kupplungselemente in der Kupplungsstellung einstellen läßt.

Hinsichtlich der Ausbildung des Spindelantriebs selbst wurden im Zusammenhang mit der bisherigen Erörterung der einzelnen Ausführungen keine näheren Angaben gemacht. So könnte beispielsweise der Spindelantrieb so ausgebildet sein, daß er über ein Getriebe die Spindelwelle antreibt.

Eine besonders günstige Lösung sieht jedoch vor, daß der Spindelantrieb ein Spindelmotor ist, dessen Rotor unmittelbar auf der Spindelwelle sitzt.

Vorzugsweise ist dabei die Spindelwelle als Hohlwelle oder auch Spindelrohr ausgebildet, so daß durch diese die Betätigung für die Werkstückaufnahme oder auch ein Stangenwerkstück selbst hindurchgeführt werden kann.

Der Spindelmotor ist in diesem Fall dann ein Hohlwellenmotor.

Hinsichtlich des Betriebs der erfindungsgemäßen Drehmaschine im unteren Drehzahlbereich kann es ausreichend sein, die Arbeitsspindel lediglich über den Zusatzantrieb anzutreiben.

Eine besonders günstige Lösung sieht jedoch vor, daß die Maschinensteuerung zum Antreiben der Arbeitsspindel im unteren Drehzahlbereich den Spindelantrieb und den Zusatzantrieb einsetzt, so daß sich die von beiden erzeugten Drehmomente ergänzen.

Um dies mit möglichst geringen Leistungsverlusten zu erreichen, ist vorzugsweise vorgesehen, daß die Maschinensteuerung den Spindelantrieb und den Zusatzantrieb im Master-Slave Betrieb betreibt, so daß sich mit möglichst geringen Verlusten eine Kopplung der beiden Antriebe erreichen läßt.

Ferner ist vorzugsweise vorgesehen, daß zum Betreiben der Arbeitsspindel als numerisch gesteuerte C-Achse der Zusatzantrieb durch die Maschinensteuerung auch als C-Achsantrieb betreibbar ist.

Hierbei ist es denkbar, entweder allein den Zusatzantrieb einzusetzen oder gegebenenfalls auch ergänzend den Spindelantrieb, vorzugsweise im Master-Slave Betrieb.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Frontansicht einer erfindungsgemäßen Drehmaschine in Richtung des Pfeils A in Fig. 1;
- Fig. 2: einen Schnitt längs Linie 2-2 in Fig. 1 und

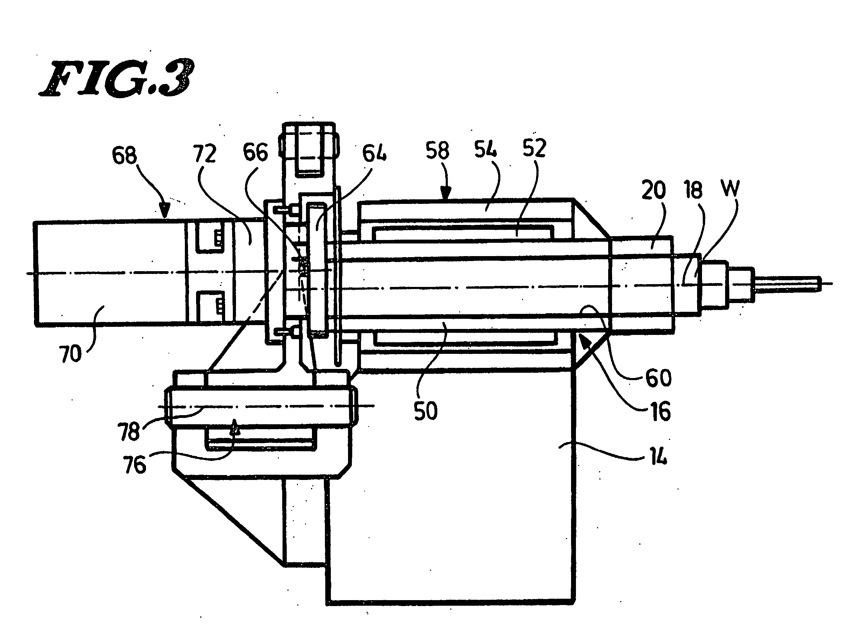

- Fig. 3: einen Schnitt längs Linie 3-3 in Fig. 2.

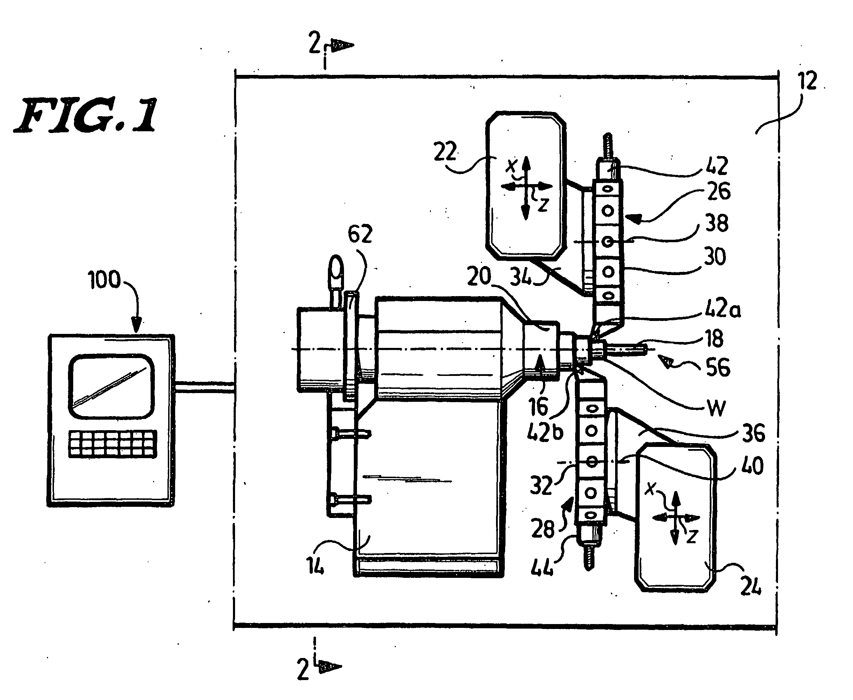

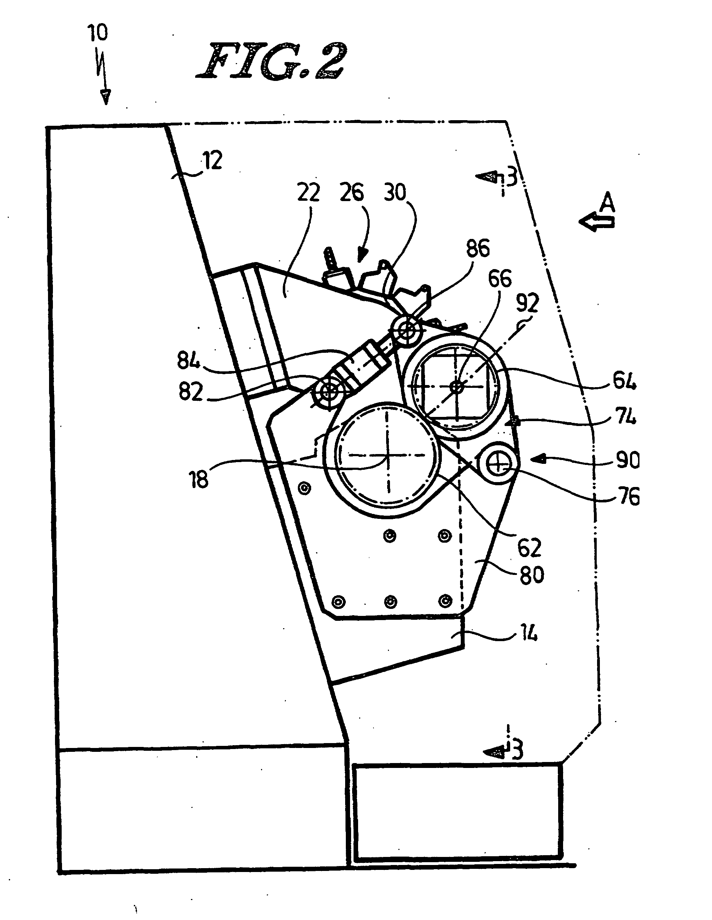

Ein Ausführungsbeispiel einer erfindungsgemäßen Drehmaschine, dargestellt in Fig. 1 und 2, umfaßt ein als Ganzes mit 10 bezeichnetes Maschinengestell, welches ein Maschinenbett 12 aufweist.

An dem Maschinenbett 12 ist ein Spindelgehäuse 14 gehalten, in welchem eine Arbeitsspindel 16 um eine Spindelachse 18 drehbar gelagert ist.

Die Arbeitsspindel 16 umfaßt ihrerseits eine Werkstückaufnahme 20, für ein Werkstück W, das somit durch die Arbeitsspindel 16 rotierend antreibbar ist.

Zur Bearbeitung des Werkstücks W ist beispielsweise auf einer Seite der Spindelachse 18 ein Kreuzschlitten 22 angeordnet und auf der gegenüberliegenden Seite der Spindelachse 18 ein Kreuzschlitten 24, die jeweils relativ zum Maschinenbett 12 in X-Richtung und Z-Richtung bewegbar sind, wobei die Z-Richtung parallel zur Spindelachse 18 und die X-Richtung quer zu dieser verlaufen.

Jeder der Kreuzschlitten 22, 24 trägt jeweils einen als Ganzes mit 26 bzw. 28 bezeichneten Werkzeugträger, beispielsweise ausgebildet als Werkzeugrevolver, mit einem Revolverkopf 30 bzw. 32, welcher gegenüber einem Revolvergehäuse 34 bzw. 36 um eine Revolverachse 38 bzw. 40 schaltbar ist, um unterschiedliche Werkzeuge 42 bzw. 44 in eine dem Werkstück W zugewandte Arbeitsstellung zu bringen, so daß mit diesen, beispielsweise mit den Werkzeugen 42a bzw. 42b, das Werkstück W wechselweise oder auch gleichzeitig bearbeitbar ist.

Die Arbeitsspindel 16 umfaßt ein eine Spindelwelle bildendes Spindelrohr 50, welches in dem Spindelgehäuse 14 um die Spindelachse 18 drehbar gelagert ist. Zum Antrieb der Arbeitsspindel 16 ist vorzugsweise auf dem Spindelrohr 50 ein Rotor 52 vorgesehen, welcher von einem im Spindelgehäuse 14 angeordneten Stator 54 umschlossen ist, so daß der Rotor 52 und der Stator 54 einen Spindelmotor 58 bilden, dessen Motorwelle durch das Spindelrohr 50 gebildet wird, welches vorzugsweise beiderseits des Rotors 52 drehbar im Spindelgehäuse 14 gelagert ist.

An einem einem Arbeitsraum 56 zugewandten Ende des Spindelrohrs 50 ist die Werkstückaufnahme 20 angeordnet, wobei das Spindelrohr 50 einen zentralen Kanal 60 aufweist, durch welchen sich eine Betätigungsvorrichtung für ein Spannmittel für das Werkstück W hindurchgeführt ist.

Es ist aber auch denkbar, durch den Kanal 60 das Werkstück W in Form einer Materialstange zuzuführen, deren vorderes Ende dann das Werkstück W bildet.

Ein derartiger Spindelmotor 58 hat den Vorteil, daß dieser eine sehr hohe Dynamik aufweist, da Übertragungsglieder als bewegte Massen wegfallen und folglich das Massenträgheitsmoment reduziert ist, eine hohe Rundlaufgenauigkeit zeigt, zum Antrieb der Arbeitsspindel 16 keine Querkräfte auf das Spindelrohr 50 wirken und außerdem eine kompakte Bauweise zur Verfügung steht, die insbesondere bei verfahrbaren Arbeitsspindeln 16 einen Aufbau mit geringem Platzbedarf ermöglicht.

Allerdings haben derartige Spindelmotoren 58 den Nachteil, daß sie im unteren Drehzahlbereich aufgrund des begrenzten und konstant bleibenden Drehmoments keine große Leistung für die Drehbearbeitung zur Verfügung stellen können.

Aus diesem Grund trägt bei der erfindungsgemäßen Lösung das Spindelrohr 50 an seinem der Werkstückaufnahme 20 abgewandten Ende ein als Zahnrad ausgebildetes erstes Kupplungselement 62, welches mit einem zweiten Kupplungselement 64 in Eingriff bringbar ist.

Das zweite Kupplungselement 64 sitzt auf einer Abtriebswelle 66 eines als Ganzes mit 68 bezeichneten Zusatzantriebs, welcher vorzugsweise einen Antriebsmotor 70 mit einem unmittelbar an diesem angesetzten Untersetzungsgetriebe 72 umfaßt, so daß an der Abtriebswelle 66 des Untersetzungsgetriebes 72 zwar keine hohen Drehzahlen erreichbar sind, jedoch bei niedrigen Drehzahlen hohe Drehmomente.

Der gesamte Zusatzantrieb 68 mit dem von der Antriebswelle 66 getragenen zweiten Kupplungselement 64 sitzt auf einem Lagerkörper 74, der mittels eines Schwenklagers 76 um eine zur Spindelachse 18 parallele Schwenkachse 78 schwenkbar an einem Haltekörper 80 gelagert ist, welcher seinerseits vorzugsweise an dem Spindelgehäuse 14 fixiert ist.

Ferner erstreckt sich der Haltekörper 80 ungefähr C-förmig um die Spindelachse 18 herum und trägt auf einer dem Schwenklager 76 ungefähr gegenüberliegenden Seite ein Gelenk 82, an welchem eine Betätigungseinrichtung 84 angreift, beispielsweise ausgebildet als Betätigungszylinder, die andererseits wiederum mittels eines Gelenks an dem Lagerkörper 74 und vorzugsweise auf einer dem Schwenklager 76 gegenüberliegenden Seite der Abtriebswelle 66 angreift.

Durch die Betätigungseinrichtung 84 ist somit der Lagerkörper 74 mitsamt dem an diesem gehaltenen Zusatzantrieb 68 und dem durch die Abtriebswelle 66 gelagerten zweiten Kupplungselement 64 relativ zum ersten Kupplungselement 62 verschwenkbar, und zwar so, daß entweder die beiden als Zahnräder ausgebildeten Kupplungselemente 62 und 64 in Wirkverbindung stehen, das heißt ineinander eingreifen und somit in ihrer Kupplungsstellung stehen, oder so, daß die Kupplungselemente 62 und 64 außer Eingriff sind und somit in ihrer Freilaufstellung stehen.

Dabei bilden der Haltekörper 80 der an diesem mittels des Schwenklagers 76 gelagerte Lagerkörper 74 und die Betätigungseinrichtung 84 insgesamt eine Führungsvorrichtung 90, mit welcher das zweite Kupplungselement 64 auf einer Kreisbahn 92 um die Schwenkachse 78 von der Kupplungsstellung in die Freilaufstellung und umgekehrt geführt bewegbar ist.

Gleichzeitig erlaubt das Vorsehen der Betätigungseinrichtung 84 aufgrund des Verlaufs der Kreisbahn 92 näherungsweise in radialer Richtung zur Spindelachse 18 gleichzeitig nicht nur eine Kupplungsstellung der Kupplungselemente 62 und 64, sondern auch in der Kupplungsstellung eine spielfreie Verbindung zwischen diesen, und zwar dadurch, daß die Betätigungseinrichtung die in Wirkverbindung stehenden Kupplungselemente 62 und 64 so beaufschlagt, daß deren Zähne in Eingriff gedrückt werden und somit diese spielfrei zueinander laufen.

Zum Betrieb der erfindungsgemäßen Drehmaschine ist eine Steuerung 100 vorgesehen, mit welcher die Kreuzschlitten 22 und 24 sowie die Werkzeugträger 26 und 28 in X- und Z-Richtung positionierbar und so steuerbar sind, daß das jeweils gewünschte Werkzeug 42 in Arbeitsstellung steht.

Ferner sind mittels der Steuerung 100 der Spindelmotor 58, der Zusatzantrieb 68 und die Betätigungseinrichtung 84 ansteuerbar, so daß beispielsweise in einem oberen Drehzahlbereich, zum Beispiel in einem Bereich oberhalb ungefähr 500 Umdrehungen/Min der Arbeitsspindel 16 ein Antrieb der Arbeitsspindel 16 ausschließlich mittels des Spindelmotors 58 erfolgt.

Hierbei ist die Betätigungseinrichtung 84 durch die Maschinensteuerung 100 so angesteuert, daß die Kupplungselemente 62 und 64 in ihrer Freilaufstellung stehen, das heißt nicht miteinander in Eingriff sind, so daß das erste Kupplungselement 62 mit der Arbeitsspindel 16 frei mitläuft.

Ferner ist im oberen Drehzahlbereich auch der Zusatzantrieb 68 nicht angesteuert.

Wird dagegen die Arbeitsspindel 16 zur Bearbeitung des Werkstücks W mit niedrigen Drehzahlen in einem unteren Drehzahlbereich betrieben, beispielsweise unterhalb ungefähr 400 Umdrehungen/Min., in welchem jedoch ein hohes Drehmoment erforderlich ist, betätigt die Maschinensteuerung 100 die Betätigungseinrichtung 84, so daß die Kupplungselemente 62 und 64 von ihrer Freilaufstellung in ihre Kupplungsstellung übergehen. In diesem Fall ist die Arbeitsspindel 16 mittels des Zusatzantriebs 68 antreibbar, welcher aufgrund der Tatsache, daß der Antriebsmotor 70 durch ein Untersetzungsgetriebe 72 untersetzt wird, im unteren Drehzahlbereich hohe Drehmomente liefert.

Es ist damit möglich, mit der Maschinensteuerung 100 die Arbeitsspindel 16 allein mittels des Zusatzantriebs 68 anzutreiben.

Besonders vorteilhaft ist es jedoch, wenn der Zusatzantrieb 68 und der Spindelmotor 58 gleichzeitig arbeiten, um auch das vom Spindelmotor 58 noch zur Verfügung stehende Drehmoment additiv zum Drehmoment des Zusatzantriebs 68 auszunutzen.

In diesem Fall betreibt die Maschinensteuerung 100 den Zusatzantrieb 68 und den Spindelmotor 58 im Master-Slave Betrieb, wobei beispielsweise der Zusatzantrieb 68 den Master-Antrieb darstellt, während der Spindelmotor 58 den Slave-Antrieb darstellt. Es ist aber auch möglich, den Spindelmotor 58 als Master-Antrieb einzusetzen und den Zusatzantrieb 68 als Slave-Antrieb

Ferner besteht die Möglichkeit, mittels der Betätigungseinrichtung 68 die Kupplungselemente 62 und 64 in der Kupplungsstellung spielfrei arbeiten zu lassen, so daß der Antrieb der Arbeitsspindel 16 mit der geforderten Laufruhe und Genauigkeit erfolgt.

Darüber hinaus ist es aber auch noch möglich, mit der Maschinensteuerung 100 die Arbeitsspindel 16 im C-Achs-Betrieb, das heißt mit definierten Winkelpositionen anzutreiben, wobei im Fall eines C-Achs-Betriebs von der Maschinensteuerung 100 definiert vorgegebene Winkelstellungen exakt angefahren werden.

In diesem Fall ist ebenfalls der Zusatzantrieb 68 der Master-Antrieb, während der Spindelmotor 58 entweder gar nicht eingesetzt wird oder den Slave-Antrieb darstellt

## Patentansprüche

1. Drehmaschine umfassend ein Maschinengestell (10), ein an dem Maschinengestell (10) gehaltenes Spindelgehäuse (14) in welchem eine eine Werkstückaufnahme (20) tragende Arbeitsspindel (16) um eine Spindelachse (18) drehbar gelagert ist, wobei die Arbeitsspindel (16) eine von einem Spindelantrieb (58) angetriebene Spindelwelle (50) umfaßt, die in einem unteren Drehzahlbereich durch einen Zusatzantrieb (68) antreibbar ist, und eine Maschinensteuerung (100) zum Ansteuern des Spindelantriebs (58),
**dadurch gekennzeichnet, daß** die Spindelwelle (50) mittels einer schaltbaren Kupplung (62, 64, 90)mit einem Zusatzantrieb (68) kuppelbar ist, daß der Zusatzantrieb (68) zum Antrieb der Arbeitsspindel (16) für eine Drehbearbeitung in einem unteren Drehzahlbereich und der Spindelantrieb (58) zum Antrieb der Arbeitsspindel (16) für eine Drehbearbeitung in einem oberen Drehzahlbereich ausgebildet sind und daß die Maschinensteuerung (100) so ausgebildet ist, daß sie erkennt, ob die Drehmaschine im oberen Drehzahlbereich oder im unteren Drehzahlbereich arbeiten soll und durch geeignetes Schalten der Kupplung (94) sowie geeignetes Ansteuern des Spindelantriebs (58) und des Zusatzantriebs (68) die Arbeitsspindel (16) im oberen Drehzahlbereich nur mittels des Spindelantriebs (58) und im unteren Drehzahlbereich mittels des Zusatzantriebs (68) und der Spindelantriebs (58) betreibt.

2. Drehmaschine nach Anspruch 1, **dadurch gekennzeichnet, daß** die schaltbare Kupplung ein erstes Kupplungselement (62) aufweist, welches auf der Spindelwelle (50) sitzt, ein zweites Kupplungselement (64) aufweist, welches durch den Zusatzantrieb (68) antreibbar ist, und eine Führungsvorrichtung (90) umfaßt, mittels welcher die Kupplungselemente (62, 64) zwischen einer Kupplungsstellung, in welcher die Kupplungselemente (62, 64) miteinander in Wirkverbindung stehen, und einer Freilaufstellung, in welcher die Kupplungselemente (62, 64) relativ zueinander frei drehbar sind, bewegbar sind.

3. Drehmaschine nach Anspruch 2, **dadurch gekennzeichnet, daß** mit der Führungsvorrichtung (90) das zweite Kupplungselement (64) längs einer definierten Bahn (92) zwischen der Kupplungsstellung und der Freilaufstellung bewegbar ist.

4. Drehmaschine nach Anspruch 2 oder 3, **dadurch gekennzeichnet, daß** die Bahn (92) ungefähr in radialer Richtung zu einer Spindelachse (18) der Arbeitsspindel (16) verläuft.

5. Drehmaschine nach einem der Ansprüche 2 bis 4, **dadurch gekennzeichnet, daß** die Führungsvorrichtung (90) eine um eine Schwenkachse (78) schwenkbare Schwenkvorrichtung ist.

6. Drehmaschine nach einem der Ansprüche 2 bis 5, **dadurch gekennzeichnet, daß** das zweite Kupplungselement (64) auf einer Abtriebswelle (66) des Zusatzantriebs (68) sitzt und daß beim Schalten der Kupplung (94) der gesamte Zusatzantrieb (68) mittels der Führungsvorrichtung (90) bewegbar ist.

7. Drehmaschine nach einem der voranstehenden Ansprüche, **dadurch gekennzeichnet, daß** der Zusatzantrieb (68) einen Antriebsmotor (70) und ein Getriebe (72) umfaßt.

8. Drehmaschine nach einem der Ansprüche 2 bis 7, **dadurch gekennzeichnet, daß** die Kupplungselemente (62, 64) als formschlüssig in Wirkverbindung bringbare Getriebeelemente ausgebildet sind.

9. Drehmaschine nach Anspruch 8, **dadurch gekennzeichnet, daß** die Getriebeelemente (62, 64) Zahnräder sind.

10. Drehmaschine nach einem der Ansprüche 2 bis 9, **dadurch gekennzeichnet, daß** die Führungsvorrichtung (90) durch eine von der Maschinensteuerung (100) ansteuerbare Betätigungsvorrichtung (84) antreibbar ist.

11. Drehmaschinen nach Anspruch 10, **dadurch gekennzeichnet, daß** die Betätigungsvorrichtung (84) als die Kupplungselemente (62, 64) in der Kupplungsstellung mit einer Kraft beaufschlagend ausgebildet ist.

12. Drehmaschine nach einem der voranstehenden Ansprüche, **dadurch gekennzeichnet, daß** der Spindelantrieb ein Spindelmotor (58) ist.

13. Drehmaschine nach einem der voranstehenden Ansprüche, **dadurch gekennzeichnet, daß** die Spindelwelle (50) als Hohlwelle ausgebildet ist.

14. Drehmaschine nach einem der voranstehenden Ansprüche, **dadurch gekennzeichnet, daß** die Maschinensteuerung den Spindelantrieb (58) und den Zusatzantrieb (68) im Master-Slave-Betrieb betreibt.

15. Drehmaschine nach einem der voranstehenden Ansprüche, **dadurch gekennzeichnet, daß** zum Betreiben der Arbeitsspindel (16) als numerisch gesteuerte C-Achse der Zusatzantrieb (68) durch die Maschinensteuerung (100) auch als C-Achsantrieb betreibbar ist.

## Claims

1. Lathe comprising a machine frame (10), a spindle housing (14) which is held on the machine frame (10) and in which a work spindle (16) bearing a chucking device (10) is mounted so as to be rotatable about a spindle axis (18), wherein the work spindle (16) comprises a spindle shaft (50) which is driven by a spindle drive (58) and can be driven in a lower speed range by an auxiliary drive (68), and a machine control arrangement (100) for activating the spindle drive (58),
**characterised in that** the spindle shaft (50) can be coupled to an auxiliary drive (68) by means of a switchable coupling (62, 64, 90), that the auxiliary drive (68) is adapted to drive the work spindle (16) for a turning treatment in a lower speed range and the spindle drive (58) is adapted to drive the work spindle (16) for a turning treatment in an upper speed range, and that the machine control arrangement (100) is adapted such that it recognises whether the lathe is to work in the upper speed range or in the lower speed range and, by appropriately switching the coupling (94) and appropriately activating the spindle drive (58) and the auxiliary drive (68), operates the work spindle (16) in the upper speed range only by means of the spindle drive (58) and in the lower speed range by means of the auxiliary drive (68) and the spindle drive (58).

2. Lathe according to Claim 1, **characterised in that** the switchable coupling comprises a first coupling element (62) which is seated on the spindle shaft (50), a second coupling element (64) which can be driven by the auxiliary drive (68), and a guide device (90), by means of which the coupling elements (62, 64) can be moved between a coupling position, in which the coupling elements (62, 64) are operatively connected together, and a freewheeling position, in which the coupling elements (62, 64) can rotate freely relative to one another.

3. Lathe according to Claim 2, **characterised in that** the second coupling element (64) can be moved by means of the guide device (90) along a defined path (92) between the coupling position and the freewheeling position.

4. Lathe according to Claim 2 or 3, **characterised in that** the path (92) extends approximately in the radial direction to a spindle axis (18) of the work spindle (16).

5. Lathe according to any one of Claims 2 to 4, **characterised in that** the guide device (90) is a pivoting device which can pivot about a pivot axis (78).

6. Lathe according to any one of Claims 2 to 5, **characterised in that** the second coupling element (64) is seated on an output shaft (66) of the auxiliary drive (68), and that the entire auxiliary drive (68) can be moved by means of the guide device (90) upon switching the coupling (94).

7. Lathe according to any one of the preceding Claims, **characterised in that** the auxiliary drive (68) comprises a drive motor (70) and a gear unit (72).

8. Lathe according to any one of Claims 2 to 7, **characterised in that** the coupling elements (62, 64) are formed as gear elements which can be operatively connected in a positive manner.

9. Lathe according to Claim 8, **characterised in that** the gear elements (62, 64) are gear wheels.

10. Lathe according to any one of Claims 2 to 9, **characterised in that** the guide device (90) can be driven by an actuating device (84) which can be activated by the machine control arrangement (100).

11. Lathe according to Claim 10, **characterised in that** the actuating device (84) is formed to apply a force to the coupling elements (62, 64) in the coupling position.

12. Lathe according to any one of the preceding Claims, **characterised in that** the spindle drive is a spindle motor (58).

13. Lathe according to any one of the preceding Claims, **characterised in that** the spindle shaft (50) is formed as a hollow shaft.

14. Lathe according to any one of the preceding Claims, **characterised in that** the machine control arrangement operates the spindle drive (58) and the auxiliary drive (68) in master-slave mode.

15. Lathe according to any one of the preceding Claims, **characterised in that**, in order to operate the work spindle (16) as a numerically controlled C-axis, the auxiliary drive (68) can also be operated as a C-axis drive by the machine control arrangement (100).

## Revendications

1. Tour comprenant un bâti de machine (10), un carter de broches (14) tenu par le bâti de machine (10), carter dans lequel un arbre moteur (16) portant un logement de pièces à usiner (20) est logé de manière rotative autour d'un axe de broche (18), sachant que l'arbre moteur (16) comprend un arbre à broches (50) entraîné par un entraînement de broches (58), arbre qui peut être entraîné par un entraînement supplémentaire (68) à un régime inférieur de vitesse de rotation, et une commande de machine (100) pour diriger l'entraînement de broches (58), **caractérisé en ce que** l'arbre à broches (50) peut être couplé avec un entraînement supplémentaire (68) au moyen d'un accouplement lâche (62, 64, 90), **en ce que** l'entraînement supplémentaire (68) est réalisé pour entraîner l'arbre moteur (16) pour un usinage au tour à un régime inférieur de vitesse de rotation et l'entraînement de broches (58) est réalisée en vue d'entraîner l'arbre moteur (16) pour un usinage au tour à un régime supérieur de vitesse de rotation et **en ce que** la commande de machine (100) est réalisée de telle sorte qu'elle reconnaît si le tour doit fonctionner à un régime supérieur ou à un régime inférieur de vitesse de rotation et, par un couplage approprié de l'embrayage (94) ainsi que par une direction adéquate de la commande de broches (58) et de l'entraînement supplémentaire (68), actionne l'arbre moteur (16) à un régime supérieur de vitesse de rotation uniquement au moyen de l'entraînement de broches (58) et à un régime inférieur de vitesse de rotation au moyen de l'entraînement supplémentaire (68) et de l'entraînement de broches (58).

2. Tour selon la revendication 1, **caractérisé en ce que** l'accouplement lâche comporte un premier élément d'embrayage (62), lequel est fixé sur l'arbre à broches (50), comprend un second élément d'embrayage (64) lequel peut être entraîné par l'entraînement supplémentaire (68), et comporte un dispositif de guidage (90) au moyen duquel les éléments d'embrayage (62, 64) peuvent être déplacés entre une position d'embrayage dans laquelle les éléments d'embrayage (62, 64) sont reliés ensemble de manière active, et une position à roue libre dans laquelle les éléments d'embrayage (62, 64) sont rotatifs relativement librement.l'un par rapport à l'autre.

3. Tour selon la revendication 2, **caractérisé en ce qu'**avec le dispositif de guidage (90), le second élément d'embrayage (64) peut être déplacé le long d'une voie définie (92) entre la position d'embrayage et la position à roue libre.

4. Tour selon la revendication 2 ou 3, **caractérisé en ce que** la voie (92) passe approximativement en sens radial par rapport à un axe de broche (18) de l'arbre moteur (16).

5. Tour selon l'une des revendications 2 à 4, **caractérisé en ce que** le dispositif de guidage (90) est un dispositif de pivotement autour d'un axe pivotant (78).

6. Tour selon l'une des revendications 2 à 5, **caractérisé en ce que** le second élément d'embrayage (64) est fixé sur un arbre de sortie (66) de l'entraînement supplémentaire (68) et **en ce que** l'ensemble de l'entraînement supplémentaire (68) peut être déplacé au moyen du dispositif de guidage (90) lors du couplage de l'embrayage (94).

7. Tour selon l'une des revendications précédentes, **caractérisé en ce que** l'entraînement supplémentaire (68) comprend un moteur de commande (70) et un engrenage (72).

8. Tour selon l'une des revendications 2 à 7, **caractérisé en ce que** les éléments d'embrayage (62, 64) sont réalisés comme éléments de transmission pouvant être reliés activement par commande mécanique.

9. Tour selon la revendication 8, **caractérisé en ce que** les éléments de transmission (62, 64) sont des roues dentées.

10. Tour selon l'une des revendications 2 à 9, **caractérisé en ce que** le dispositif de guidage (90) peut être entraîné par un dispositif d'actionnement (84) dirigeable par la commande de machine (100).

11. Tour selon la revendication 10, **caractérisé en ce que** le dispositif d'actionnement (84), comme les éléments d'embrayage (62, 64), est réalisé de manière à exercer une force en position d'embrayage.

12. Tour selon l'une des revendications précédentes, **caractérisé en ce que** l'entraînement des broches est un moteur à broches (58).

13. Tour selon l'une des revendications précédentes, **caractérisé en ce que** l'arbre à broches (50) est réalisé comme arbre creux.

14. Tour selon l'une des revendications précédentes, **caractérisé en ce que** la commande de machine actionne l'entraînement de broches (58) et l'entraînement supplémentaire (68) en mode Master-Slave.

15. Tour selon l'une des revendications précédentes, **caractérisé en ce que** pour actionner l'arbre moteur (16) comme axe C à commande numérique, l'entraînement supplémentaire (68) peut également être actionné par la commande de machine (100) comme entraînement d'axe C.
